# EUROPÄISCHE PATENTANMELDUNG

(11) **EP 4 470 817 A1**
(43) Veröffentlichungstag der Anmeldung: **04.12.2024**
(21) Anmeldenummer: 23176900.1
(22) Anmeldetag: 02.06.2023
(51) Int. Cl.: B60L 9/30, B60L 53/14

(54) **SCHIENENFAHRZEUG, LADESTATION, VERFAHREN ZUM LADEN EINES SCHIENENFAHRZEUGES SOWIE LADESYSTEM**

(71) Anmelder: Stadler Rail AG, 9565 Bussnang (CH)
(72) Erfinder: Tscheng, Jorgen, 8046 Zürich (CH)
(74) Vertreter: Hepp Wenger Ryffel AG

(57) **Zusammenfassung**

Es wird ein Schienenfahrzeug offenbart, welches einen elektrischen Energiespeicher (2), eine Ladekontaktvorrichtung (7), eine Ladesteuerung und einen Gleichstromzwischenkreis (1) umfasst. Der elektrische Energiespeicher (2) und die Ladekontaktvorrichtung (7) sind jeweils mit dem Gleichstromzwischenkreis 1 verbunden. Zwischen Ladekontaktvorrichtung (7) und Gleichstromzwischenkreis (1) ist ein Ladeschalter (8) angeordnet. Der Ladeschalter (8) ist so über eine Komponente der Hardwareschaltung (9) durch die Ladesteuerung gesteuert, dass nur bei einem Einschaltspannungsniveau der Ladeschalter (8) schliessbar ist und eine elektrische Verbindung zwischen Ladekontaktvorrichtung (7) und Gleichstromzwischenkreis (1) erzielbar ist, wobei die Komponente der Ladesteuerung insbesondere eine Hardwareschaltung (9) ist.

## Beschreibung

Die Erfindung betrifft ein Schienenfahrzeug, eine Ladestation, ein Verfahren zum Laden eines Schienenfahrzeuges sowie ein Ladesystem.

Es ist bekannt, Traktionsbatterien von Schienenfahrzeugen durch Ladestationen aufzuladen. Hierzu muss eine elektrisch leitende Verbindung zwischen Fahrzeug und Ladestation hergestellt werden. Dabei muss gewährleistet werden, dass es auf der Seite Fahrzeug und auch auf der Seite Ladestation nicht zu unzulässigen Betriebszuständen, insbesondere nicht zu unzulässigen Spannungs- oder Stromspitzen kommt. Weiterhin muss die Sicherheit anwesender Personen gewährleistet sein. Aus der EP 3 597 469 ist ein Verfahren zur Herstellung eines Kontakts zwischen Fahrzeug und Ladestation bekannt. Dieses Verfahren ist jedoch aufwendig und nicht für Fahrzeuge geeignet, bei dem die Traktionsbatterien nicht über zugeordnete Stromrichter verfügen.

Es ist daher die Aufgabe der vorliegenden Erfindung ein Schienenfahrzeug, eine Ladestation, ein Verfahren zum Laden eines Schienenfahrzeuges sowie ein Ladesystem zu schaffen, welches die Nachteile des Standes der Technik vermeidet und insbesondere einen Kontakt zwischen Fahrzeug und Ladestation auf sichere Weise ermöglicht.

Die Aufgabe wird durch ein Schienenfahrzeug, eine Ladestation, ein Verfahren zum Laden eines Schienenfahrzeuges, sowie ein Ladesystem gemäss den unabhängigen Ansprüchen gelöst.

Insbesondere wird die Aufgabe durch ein Schienenfahrzeug gelöst, das einen elektrischen Energiespeicher, eine Ladekontaktvorrichtung, eine Ladesteuerung sowie einen Gleichstromzwischenkreis umfasst. Der elektrische Energiespeicher und die Ladekontaktvorrichtung sind jeweils mit dem Gleichstromzwischenkreis verbunden. Ein Ladeschalter ist zwischen Ladekontaktvorrichtung und Gleichstromzwischenkreis angeordnet. Der Ladeschalter ist so über eine Komponente der Ladesteuerung gesteuert, dass nur bei einem Einschaltspannungsniveau der Ladeschalter schliessbar ist und eine elektrische Verbindung zwischen Ladekontaktvorrichtung und Gleichstromzwischenkreis erzielbar ist. Die Komponente der Ladesteuerung kann eine Hardwareschaltung sein.

Durch die Steuerung des Ladeschalters über die Komponente der Ladesteuerung wird gewährleistet, dass die Ladekontaktvorrichtung nicht ungewollt unter Spannung gesetzt wird. Die Hardwareschaltung kann als Relaisschaltung ohne Elektronik ausgebildet sein. Die Hardwareschaltung kann baulich von der allgemeinen Ladesteuerung, die auch empfindliche Sensoren und Steuerungssoftware umfassen kann, getrennt sein. Dies macht das Schienenfahrzeug robust und langlebig. Die Hardwareschaltung kann so ausgebildet und elektromechanisch dimensioniert sein, dass sie nicht schliesst, wenn eine zu tiefe oder zu hohe Spannung anliegt. Die Hardwareschaltung trennt zwei elektrische Leiter mechanisch, so dass zwischen den zwei elektrischen Leitern im geöffneten Zustand der Hardwareschaltung ein Isolationsmedium angeordnet ist und kein Strom zwischen den Leitern fliessen kann. Im geschlossenen Zustand der Hardwareschaltung sind die zwei Leiter elektrisch durch ein Leitmedium verbunden und der elektrische Strom kann zwischen den beiden Leitern fliessen. Der Energiespeicher ist bevorzugt eine Batterie.

Das Einschaltspannungsniveau liegt unterhalb des Batteriespannungsniveaus des Schienenfahrzeugs. Somit kann das Schienenfahrzeug erkennen, wenn eine Verbindung zur Ladestation ausgebildet worden ist. Es ist möglich, dass durch das Schienenfahrzeug erkennbar ist, ob bereits ein anderes Schienenfahrzeug an die Ladestation angeschlossen ist und/oder die Ladestation schon im Lademodus ist. Nur bei Anliegen der Einschaltspannung wird der fahrzeugseitige Hardwareschalter geschlossen und eine elektrische Verbindung zwischen Ladestation und Schienenfahrzeug ermöglicht. Die Hardwareschaltung ist bevorzugt eine Relaisschaltung. Die Hardwareschaltung kann auch als Spannungsteiler ausgebildet sein. Es ist möglich, dass die Hardwareschaltung eine Relaisschaltung und einen Spannungsteiler umfasst.

Mit einem derartigen Schienenfahrzeug kann einfach und sicher eine elektrische Verbindung zwischen Schienenfahrzeug und Ladevorrichtung erzielt werden.

Es ist möglich, dass die Ladestation eine Vorladeeinrichtung und/oder eine Strombegrenzungseinrichtung aufweist. Dann wird der Strom und die Spannung über die Vorladeeinrichtung und/oder die Strombegrenzungseinrichtung elektrisch übertragen. So können Stromspitzen, beispielsweise beim Umschalten in den Ladezustand, vermieden werden.

Das Schienenfahrzeug kann ein Kommunikationsmittel zur Kommunikation mit der Ladestation umfassen.

Somit kann das Schienenfahrzeug der Ladestation mitteilen, dass das Laden beendet werden soll oder dass die Ladespannung und/oder der Ladestrom während des Ladevorgangs angepasst werden soll. Es ist möglich, dass das Kommunikationsmittel Wireless LAN, ein Remote-Diagnostic-System, ein PIS-System (Passenger Information System) oder eine Hardware-Schnittstelle umfasst. Es ist auch möglich, dass das Kommunikationsmittel eine Kombination der vorhergehend genannten Komponenten umfasst.

Somit kann der Ladevorgang optimiert werden.

Das Schienenfahrzeug kann zwei Ladekontaktvorrichtungen umfassen.

Somit können zwei Kontakte mit der Ladeeinrichtung hergestellt werden und ein Rückstrom über die Schiene ist nicht notwendig.

Der Ladeschalter kann nur über die Ladesteuerung schliessbar sein.

Dies bedeutet, dass der Ladeschalter ausschliesslich geschlossen wird, wenn eine Einschaltspannung durch die Ladesteuerung detektiert wird. Somit wird der Ladeschalter nicht unmittelbar durch eine Software, sondern nur über die anliegende Einschaltspannung eingeschaltet. Da diese Einschaltspannung nur vorhanden ist, wenn die Ladekontaktvorrichtung mit der Ladestation verbunden ist, kann so verhindert werden, dass die Ladekontaktvorrichtung ungewollt unter Spannung gesetzt wird wenn die Ladekontaktvorrichtung nicht mit der Ladestation verbunden oder diese nicht betriebsbereit ist. Dadurch kann ausgeschlossen werden, dass die Ladekontaktvorrichtung unter Spannung steht, wenn kein Schienenfahrzeug geladen werden soll und beispielsweise Wartungsarbeiten stattfinden.

Es ist möglich, dass die Ladestation ausschliesslich elektrischen Strom bereitstellt, wenn ein Schienenfahrzeug an die Ladekontaktvorrichtung angeschlossen ist, das Schienenfahrzeug detektiert wird und die Ladesteuerung den Befehl zum Laden des Schienenfahrzeuges erhält, beispielsweise über das Kommunikationsmittel. Das Schienenfahrzeug kann beispielsweise über eine Balise oder über einen RFID-Tag detektiert werden.

Somit kann ein sicheres Einschalten des Ladevorgangs garantiert werden.

Die Ladekontaktvorrichtung kann zweipolig ausgebildet sein.

Somit wird zwischen Fahrzeug und Ladestation ein gemeinsames Bezugspotential ausgebildet und es muss kein Rückstrom über die Schiene geführt werden. Dies ist insbesondere vorteilhaft bei Schienen, die nicht für Rückstromführung ausgelegt sind, wie beispielsweise bei Dieselstrecken, da die streckenseitigen Einrichtungen hier nicht für eine Rückstromführung ausgelegt sind und somit gestört werden können. Es ist möglich, dass das Schienenfahrzeug über die Ladekontaktvorrichtung mittels Gleichstroms über einen Gleichstromkreis geladen wird. Dann bewegen sich die Ladungsträger (Elektronen) in dem Gleichstromzwischenkreis bei dem Ladevorgang immer in dieselbe Richtung.

Die Energiespeichervorrichtungen können direkt mit dem Gleichstromzwischenkreis verbunden sein, insbesondere ohne zusätzlichen Energiespeichervorrichtungsstromrichter.

Zur Lösung der Aufgabe führt weiterhin eine Ladestation zum Laden eines Schienenfahrzeuges, insbesondere eines Schienenfahrzeuges wie vorhergehend beschrieben. Die Ladestation umfasst eine Ladestationssteuerung und eine Kontaktstelle zur elektrischen Verbindung mit einer Ladekontaktvorrichtung eines Schienenfahrzeuges. Die Ladestationssteuerung ist derart ausgestaltet, dass eine Einschaltspannung an die Kontaktstelle anlegbar ist und die Ladestation erkennt, wenn eine höhere Batteriespannung des Schienenfahrzeuges anliegt, als die Einschaltspannung der Ladestation und dann das Spannungsniveau der Ladestation auf die Ladespannung erhöhbar ist.

Eine derartige Ladestation erkennt automatisch, ob ein Schienenfahrzeug mit der Ladestation elektrisch verbunden ist und kann so sicher die Ladespannung anlegen, ohne dass weitere Kommunikationsmittel mit dem Schienenfahrzeug notwendig sind.

Ausserdem wird so gewährleistet, dass an die Ladekontaktvorrichtung nicht ungewollt eine Spannung durch das Schienenfahrzeug angelegt wird.

Die Batteriespannung des Schienenfahrzeuges ist hierbei höher als die Einschaltspannung der Ladestation. Somit ist sichergestellt, dass in dieser Phase kein Stromfluss in Richtung Batterie entstehen kann. Der Ladeschalter des Schienenfahrzeuges bleibt geschlossen.

Die Ladestation kann einen geregelten Gleichrichter und eine Energieversorgung umfassen.

Die Energieversorgung kann ein Stromnetz oder ein Dieselgenerator sein. Es ist möglich, dass die Energieversorgung Brennstoffzellen oder Batterien umfasst. Durch den Gleichrichter kann die Ladestation das Spannungsniveau an die aktuellen Bedürfnisse anpassen. Bei dem Gleichrichter kann es sich um einen geregelten Gleichrichter handeln.

Zwischen Kontaktstelle und Gleichrichter kann ein Linienschütz mit Vorladeschütz, insbesondere ein elektronisches Schütz, wie beispielsweise ein IGBT, angeordnet sein. Alternativ kann eine Strombegrenzungseinrichtung zwischen Kontaktstelle und Gleichrichter angeordnet sein. Der Vorladeschütz kann als Strombegrenzungseinrichtung ausgebildet sein.

Eine derartige Ladestation ermöglicht das Anlegen einer höheren Spannung, sofern dies zum Laden erwünscht ist.

Zur Lösung der Aufgabe führt weiterhin ein Verfahren zum Laden eines Schienenfahrzeuges, insbesondere eines Schienenfahrzeuges wie vorhergehend beschrieben, mit einer Ladestation, insbesondere mit einer Ladestation wie vorhergehend beschrieben. Das Verfahren umfasst die Schritte:
- Anlegen eines Einschaltspannungsniveaus an die Kontaktstelle der Ladestation,
- Herstellen einer elektrisch leitenden Verbindung zwischen Ladekontaktvorrichtung und Kontaktstelle während das Einschaltspannungsniveau anliegt,
- Schliessen des Ladeschalters, so dass der Gleichstromzwischenkreis des Schienenfahrzeuges mit der Ladestation verbunden ist, wobei das Batteriespannungsniveau des Schienenfahrzeugs anliegt,
- Erkennen des anliegenden Batteriespannungsniveaus durch die Ladestation, wobei das Batteriespannungsniveau höher ist als das Einschaltspannungsniveau der Ladestation,
- Erhöhung des Spannungsniveaus durch die Ladestation vom Einschaltspannungsniveau auf ein Ladespannungsniveau.

Mit einem derartigen Verfahren kann das Schienenfahrzeug leicht feststellen, ob eine elektrische Verbindung zur Ladestation vorliegt, und erst wenn das Schienenfahrzeug die Ladung der Batterien freigibt, kann überhaupt eine höhere Spannung angelegt werden. Somit ist das Verfahren sicher und einfach. Ausserdem ist es durch das Verfahren möglich, den Ladestrom zu Steuern und zu Regeln. So kann ein Ladevorgang besonders vorteilhaft gesteuert und durchgeführt werden.

Die Ladespannung ist typischerweise kleiner als 1000 V

Das Anlegen des Einschaltspannungsniveaus an die Kontaktstelle der Ladestation kann über eine Strombegrenzungseinrichtung erfolgen.

Durch ein derartiges Verfahren werden Stromspitzen verhindert.

Durch das Erkennen des anliegenden Batteriespannungsniveaus durch die Ladestation wird gewährleistet, dass ein Einschaltspannungsniveau der Ladestation gewählt werden kann, welches unter dem Batteriespannungsniveau liegt. Dies ist insbesondere relevant, wenn die Batterie nicht oder nur geringfügig geladen ist.

Die Einschaltspannung kann im Bereich von 400 V liegen. Hierbei ist wichtig, dass die Einschaltspannung unterhalb der entladenen Batteriespannung liegt, also beispielsweise unterhalb der tiefsten betrieblich zulässigen Spannung der kompatiblen Batterien des Schienenfahrzeuges. Die Batteriespannung, also gleichzeitig die Zwischenkreisspannung, liegt typischerweise im Bereich von 600 bis 1000 V. Die Batteriespannung kann auch beim 200V liegen. Das Einschaltspannungsniveau ist tiefer als der untere Spannungsbereich des Energiespeichers, insbesondere im Wesentlichen in einem Bereich von 300 bis 400 V.

Sobald die Ladestation die höhere Spannung, also die Batteriespannung erkennt, erhöht sie ihre Ausgangsspannung, schliesst den Linienschütz und trennt die Vorlade- oder Strombegrenzungseinrichtung. Die Einschaltspannung wird über die Vorlade- und/oder Strombegrenzungsvorrichtung angelegt, bevor die Vorlade- und/oder Strombegrenzungseinrichtung getrennt wird.

Die Ladestation kann die Anwesenheit eines Schienenfahrzeugs vorgängig detektieren.

Dies ermöglicht das Einschalten des Einschaltspannungsniveaus erst wenn ein Schienenfahrzeug tatsächlich in Nähe der Ladestation detektiert wird und spart somit Energie und erhöht die Sicherheit. Die Detektion eines Schienenfahrzeugs kann durch bekannte Mittel wie optische Detektion oder elektrisch oder elektronische Detektion durchgeführt werden.

Das Schienenfahrzeug kann über das Kommunikationsmittel mit der Ladestation kommunizieren, insbesondere der Ladestation ein Ladestrom oder eine Ladespannung vorgeben.

Eine derartige Kommunikation ist optional, wenn man entweder Limiten der Ladeströme nicht ausreizt oder vordefinierte Ladekennlinien vorgibt. Die Sicherheitsfunktionen der Batterien verhindern unzulässige Ladezustände.

Eine Kommunikation mit der Ladestation ermöglicht ein optimales Laden des Schienenfahrzeuges.

Der Ladevorgang kann fahrzeugseitig beendet werden, insbesondere durch ein Öffnen des Ladeschalters und/oder durch das Unterbrechen des Kontaktes von Ladekontaktvorrichtung und Kontaktstelle.

Somit kann das Schienenfahrzeug den Ladevorgang auch ohne Kommunikationsmittel unterbrechen, falls notwendig. Sofern es Kommunikation zwischen Ladestation und Schienenfahrzeug gibt, wird die Ladestation zuerst den Ladestrom zurücknehmen, also beispielsweise durch Einregeln auf die Einschaltspannung. Dann kann sich das Fahrzeug von der Kontaktstelle trennen in dem der Ladeschalter geöffnet und die Ladekontaktvorrichtung von der Kontaktstelle entfernt wird. Die Trennung kann stromlos erfolgen.

Somit ist ein optimales Trennen der Ladeverbindung mit Kommunikation sehr gut möglich, allerdings ist diese Kommunikation nicht notwendig. Somit muss das Kommunikationsmittel auch nicht unbedingt ausfallsicher sein.

Somit ist das Ladeverfahren jederzeit einfach und günstig durchzuführen und gleichzeitig leicht zu optimieren.

Das Schienenfahrzeug kann daher über das Kommunikationsmittel der Ladestation vor dem Öffnen des Ladeschalters mitteilen, dass der Ladevorgang beendet werden soll, wobei die Ladestation daraufhin insbesondere die Spannung senkt und die Ladestation den Linienschütz öffnet.

Somit lässt sich der Ladevorgang optimal beenden.

Soll beim Laden der Rückstrom über die Räder und Schiene geleitet werden, muss sowohl die Ladestation als auch der Zwischenkreis mit dem Minuspol der Batterie auf Erdpotential liegen. In diesem Fall ist nur eine Kontaktvorrichtung und ein Schalter benötigt. Die Spannungserkennung der Ladesteuerung detektiert die Spannung zwischen der Kontaktvorrichtung und dem Erdpotential am Rad.

Sofern ein Rückstrom über die Schiene vermieden werden soll, werden zwei Kontaktvorrichtungen benötigt. Die Spannungserkennung der Ladesteuerung findet dann zwischen den beiden Kontakteinrichtungen statt. Das Bezugserdpotential zwischen Fahrzeug und Ladeeinrichtung muss in diesem Fall abgestimmt sein, um Ausgleichs- und Common-mode-ströme zu vermeiden.

Verfügt ein Fahrzeug über mehrere Batteriekreise, kann auch lediglich eine Ladestation verwendet werden. Dann wird zuerst der am tiefsten entladene Batteriekreis geladen und wenn die erreichte Spannung dem nächst höher geladenen Batteriekreis entspricht, wird dieser zugeschaltet. Es sind somit nicht mehrere Ladestationen nötig. Es ist möglich, dass das Schienenfahrzeug die Batterien im Wesentlichen gleichmässig belastet (entlädt) oder lädt.

Die Aufgabe wird weiterhin durch ein Ladesystem gelöst, welches ein Schienenfahrzeug wie vorhergehend beschrieben und eine Ladestation wie vorhergehend beschrieben umfasst, wobei ein Verfahren wie vorhergehend beschrieben ausführbar ist.

Ein derartiges Ladesystem ermöglicht ein einfaches, sicheres und zuverlässiges Laden eines batteriebetriebenen Schienenfahrzeuges.

Die Erfindung wird im Folgenden in Ausführungsbeispielen an Hand von Figuren näher erläutert. Hierbei zeigt:
- Figur 1:: Die Traktionskette eines Schienenfahrzeuges,
- Figur 2:: die Traktionskette aus Fig. 1. mit zwei Stromabnehmern,
- Figur 3:: die Ladestation.

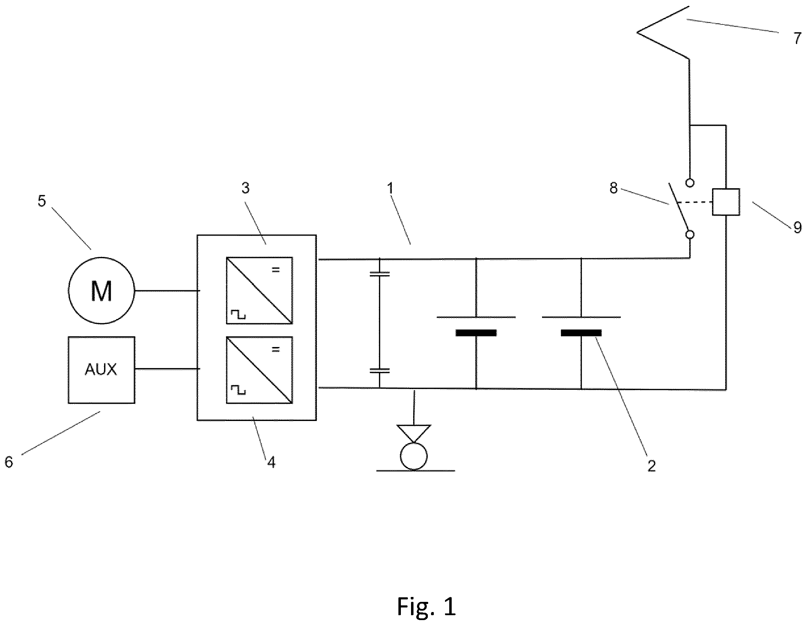

Figur 1 zeigt die Traktionskette eines Schienenfahrzeuges gemäss der Erfindung. Das Schienenfahrzeug umfasst einen Gleichstromzwischenkreis 1, der direkt mit elektrischen Energiespeichern 2 verbunden ist. Der Gleichstromzwischenkreis 1 ist über Motorstromrichter 3 mit den Fahrmotoren 5 verbunden. Der Gleichstromzwischenkreis 1 ist weiterhin über Hilfsbetriebeumrichter 4 mit Hilfsbetrieben 6 verbunden. Somit kann der Gleichstromzwischenkreis 1 Motoren und Hilfsbetriebe mit Energie versorgen. Der Gleichstromzwischenkreis 1 ist weiterhin über Ladeschalter 8 mit der Ladekontaktvorrichtung 7 verbunden. Über die Ladekontaktvorrichtung 7 können die Energiespeicher 2 mit elektrischer Energie aufgeladen werden. Der Ladeschalter 8 ist weiterhin über die Hardwareschaltung 9 so gesteuert, dass nur bei einem Einschaltspannungsniveau der Ladeschalter 8 schliessbar ist und eine elektrische Verbindung zwischen Ladekontaktvorrichtung 7 im Gleichstromzwischenkreis 1 erzielbar ist. Die Hardwareschaltung 9 ist bevorzugt eine Relaisschaltung. Die Ladekontaktvorrichtung 7 kann mit einer Kontaktstelle 25 (nicht dargestellt) mit einer Ladestation in Kontakt gebracht werden und so über die Ladestation geladen werden.

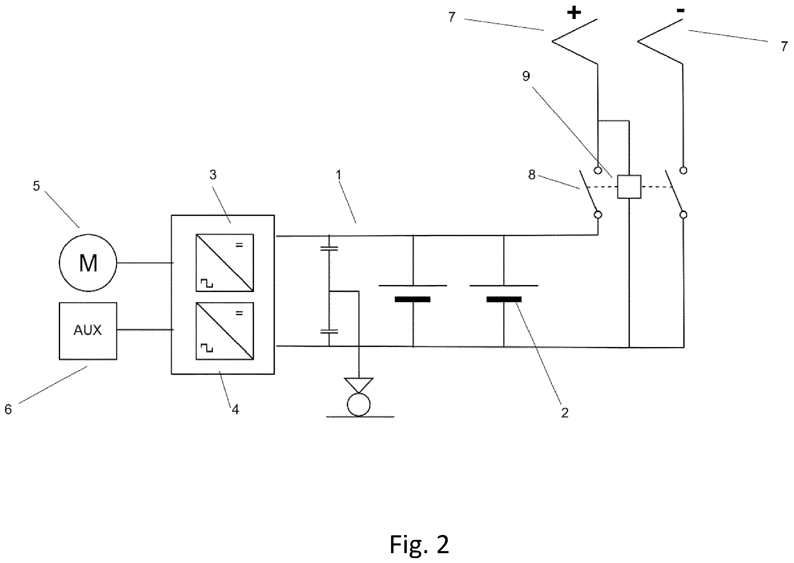

Figur 2 zeigt die Traktionskette analog zu Figur 1 mit zwei Ladekontaktvorrichtungen 7. Somit sind auch zwei Ladeschalter 8, jeweils ein Ladeschalter 8 pro Ladekontaktvorrichtung 7 ausgebildet. Die Hardwareschaltung 9 entspricht ebenfalls der Hardwareschaltung 9 aus Figur 1 und sorgt dafür, dass beide Ladeschalter 8 nur bei anliegender Einschaltspannung schliessbar sind. Alle anderen Bauteile der Figur 2 entsprechen der Darstellung der Figur 1. In beiden Figuren liegt das Einschaltspannungsniveau, welches dazu führt, dass die Ladeschalter 8 schliessbar sind, unterhalb des Batteriespannungsniveaus des Schienenfahrzeuges.

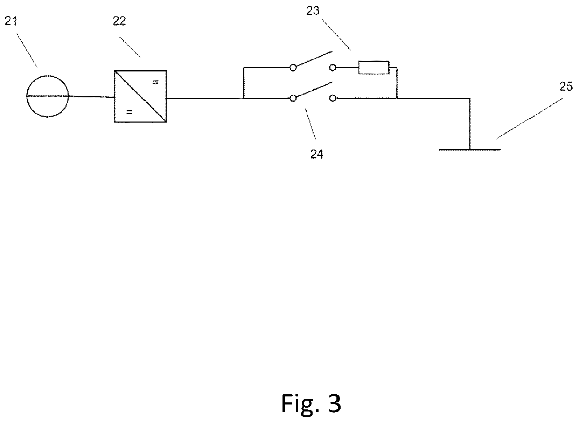

Figur 3 zeigt die Ladestation gemäss der Erfindung. Die Ladestation umfasst eine Gleichspannungsquelle 21, die mit einem Gleichrichter 22 verbunden ist, welcher einen Gleichstrom zu einem anderen Gleichstrom umwandelt. Dann handelt es sich bei dem Gleichrichter um einen DC/DC-Wandler. Der Gleichrichter 22 ist über Linienschütz 24 mit Vorladeschütz 23 oder Strombegrenzungseinrichtung 23 mit der Kontaktstelle 25 der Ladestation verbunden. Die Kontaktstelle 25 ist dazu ausgebildet, in elektrische Verbindung mit einer Ladekontaktvorrichtung 7 eines Schienenfahrzeugs gemäss Figuren 1 und 2 elektrisch verbunden zu werden. Die Gleichspannungsquelle 21 kann selbstverständlich durch irgendeine Art von Energieversorgung versorgt werden. Die Ladestation legt bei Detektion eines Schienenfahrzeuges in der Ladestation einer Einschaltspannungsniveau an die Kontaktstelle 25 der Ladestation. Sobald eine elektrisch leitende Verbindung zwischen Ladekontaktvorrichtung 7 des Schienenfahrzeugs von der Kontaktstelle 25 während des Einschaltspannungsniveaus hergestellt ist, werden die fahrzeugseitigen Schalter (nicht dargestellt) geschlossen und anschliessend detektiert die Ladestation das Anliegen eines Batteriespannungsniveaus, welches höher ist als das Einschaltspannungsniveau der Ladestation. Sobald dies detektiert wurde, wird die Ladestation das Spannungsniveau vom Einschaltspannungsniveau auf ein Ladespannungsniveau anheben. Die Ladestation umfasst hierfür eine Spannungsdetektionsvorrichtung (nicht dargestellt).

## Patentansprüche

1. Schienenfahrzeug umfassend einen elektrischen Energiespeicher (2), eine Ladekontaktvorrichtung (7), eine Ladesteuerung und einen Gleichstromzwischenkreis (1), wobei der elektrische Energiespeicher (2) und die Ladekontaktvorrichtung (7) jeweils mit dem Gleichstromzwischenkreis (1) verbunden sind und ein Ladeschalter (8) zwischen Ladekontaktvorrichtung (7) und Gleichstromzwischenkreis (1) angeordnet ist, **dadurch gekennzeichnet, dass** der Ladeschalter (8) so über eine Komponente der Ladesteuerung gesteuert ist, dass nur bei einem Einschaltspannungsniveau der Ladeschalter (8) schliessbar ist und eine elektrische Verbindung zwischen Ladekontaktvorrichtung (7) und Gleichstromzwischenkreis (1) erzielbar ist, wobei die Komponente der Ladesteuerung insbesondere eine Hardwareschaltung (9) ist.

2. Schienenfahrzeug nach Anspruch 1, **dadurch gekennzeichnet, dass** ein Kommunikationsmittel zur Kommunikation mit der Ladestation ausgebildet ist.

3. Schienenfahrzeug nach einem der vorhergehenden Ansprüche, **dadurch gekennzeichnet, dass** zwei Ladekontaktvorrichtungen(7)ausgebildet sind.

4. Schienenfahrzeug nach einem der vorhergehenden Ansprüche, **dadurch gekennzeichnet, dass** der Ladeschalter (8) nur über die Ladesteuerung schliessbar ist.

5. Schienenfahrzeug nach einem der vorhergehenden Ansprüche, **dadurch gekennzeichnet, dass** die Ladekontaktvorrichtung (7)zweipolig ausgebildet ist.

6. Ladestation zum Laden eines Schienenfahrzeuges, insbesondere eines Schienenfahrzeuges gemäss einem der Ansprüche 1-5, umfassend eine Ladestationssteuerung und eine Kontaktstelle (25) zur elektrischen Verbindung mit einer Ladekontaktvorrichtung eines Schienenfahrzeuges, **dadurch gekennzeichnet, dass** die Ladestationssteuerung derart ausgestaltet ist, dass eine Einschaltspannung an die Kontaktstelle (25) anlegbar ist und dass die Ladestationssteuerung erkennt, wenn eine höhere Batteriespannung des Schienenfahrzeuges anliegt als die Einschaltspannung der Ladestation und dann das Spannungsniveau der Ladestation auf die Ladespannung erhöhbar ist.

7. Ladestation nach Anspruch 6, **dadurch gekennzeichnet, dass** die Ladestation einen geregelten Gleichrichter (22) und eine Energieversorgung (21) umfasst.

8. Ladestation nach einem der vorhergehenden Ansprüche, **dadurch gekennzeichnet, dass** ein Linienschütz (24) mit Vorladeschütz (23) oder eine Strombegrenzungseinrichtung zwischen Kontaktstelle (25) und Gleichrichter (22) angeordnet ist.

9. Verfahren zum Laden eines Schienenfahrzeuges, insbesondere eines Schienenfahrzeuges nach einem der Ansprüche 1-5, mit einer Ladestation, insbesondere mit einer Ladestation nach einem der Ansprüche 6-8, umfassend die Schritte:
- Anlegen eines Einschaltspannungsniveaus an die Kontaktstelle (25) der Ladestation
- Herstellen einer elektrisch leitenden Verbindung zwischen Ladekontaktvorrichtung (7) und Kontaktstelle (25) während das Einschaltspannungsniveau anliegt,
- Schliessen des Ladeschalters (8), so dass der Gleichstromzwischenkreis des Schienenfahrzeuges mit der Ladestation verbunden ist, wobei das Batteriespannungsniveau anliegt,
- Erkennen des anliegenden Batteriespannungsniveaus durch die Ladestation, wobei das Batteriespannungsniveau höher ist als das Einschaltspannungsniveau der Ladestation,
- Erhöhung des Spannungsniveaus durch die Ladestation vom Einschaltspannungsniveaus auf ein Ladespannungsniveau.

10. Verfahren nach Anspruch 9, **dadurch gekennzeichnet, dass** das Einschaltspannungsniveau tiefer ist als der untere Spannungsbereich des Energiespeichers (2), insbesondere im Wesentlichen in einem Bereich von 300-400 V.

11. Verfahren nach einem der Ansprüche 9 oder 10, **dadurch gekennzeichnet, dass** die Ladestation die Anwesenheit eines Schienenfahrzeuges vorgängig detektiert.

12. Verfahren nach einem der vorhergehenden Ansprüche 9-11, **dadurch gekennzeichnet, dass** das Schienenfahrzeug über das Kommunikationsmittel mit der Ladestation kommuniziert, insbesondere der Ladestation einen Ladestrom oder eine Ladespannung vorgibt.

13. Verfahren nach einem der vorhergehenden Ansprüche 9-12, **dadurch gekennzeichnet, dass** der Ladevorgang fahrzeugseitig beendet wird, insbesondere durch ein Öffnen des Ladeschalters (8) und/oder durch das Unterbrechen des Kontaktes von Ladekontaktvorrichtung (7) und Kontaktstelle (8).

14. Verfahren nach Anspruch 13, **dadurch gekennzeichnet, dass** das Schienenfahrzeug über das Kommunikationsmittel der Ladestation vor dem Öffnen des Ladeschalters (8) mitteilt, dass der Ladevorgang beendet werden soll, wobei die Ladestation daraufhin insbesondere die Spannung senkt und die Ladestation den Linienschütz (24) öffnet.

15. Ladesystem umfassend ein Schienenfahrzeug nach einem der Ansprüche 1-5 und einer Ladestation gemäss einem der Ansprüche 6-8, wobei ein Verfahren nach einem der Ansprüche 9-13 ausführbar ist.
